# EUROPÄISCHE PATENTANMELDUNG

(11) **EP 2 420 156 A1**
(43) Veröffentlichungstag der Anmeldung: **22.02.2012**
(21) Anmeldenummer: 10008599.2
(22) Anmeldetag: 18.08.2010
(51) Int. Cl.: A46B 9/04, A46B 9/06, A46D 3/04

(54) **Zahnbürste mit Borstenbündeln, die Borsten unterschiedlicher Länge aufweisen, und Vorrichtung zum Beborsten einer solchen Zahnbürste**

(71) Anmelder: Trisa Holding AG, 6234 Triengen (CH)
(72) Erfinder: Hess, Walter, 6012 Obernau (CH); Steinmann, Patrik, 6206 Neuenkirch (CH)
(74) Vertreter: Schaad, Balass, Menzl & Partner AG

(57) **Zusammenfassung**

Die Erfindung betriff eine Zahnbürste mit einem Handgriff und einem borstentragenden Kopfteil, die durch einen Halsteil miteinander verbunden sind, wobei das Kopfteil aus einer Vielzahl von Borsten bestehenden Borstenbündel aufweist, dadurch gekennzeichnet, dass zwei oder mehr Borstenbündel mindestens eine Borste mit einem relativ zu den Borstenenden der anderen Borsten höherstehenden Borstenende aufweisen, wobei die mindestens eine Borste mit höherstehendem Borstenende innerhalb des Borstenbündels nicht zentrisch angeordnet ist, und wobei die zwei oder mehr Borstenbündel auf gegenüberliegenden Seiten einer Mittellängsebene der Zahnbürste angeordnet und mit einer die mindestens eine Borste mit höherstehendem Borstenende umfassenden Hälfte des Borstenbündels zur Mittellängsebene hin oder alternativ davon weg orientiert sind. Im Weiteren betrifft die Erfindung eine Vorrichtung zum Beborsten von Zahnbürsten und ein Verfahren zum Beborsten von Zahnbürsten mit dieser Vorrichtung.

## Beschreibung

Die vorliegende Erfindung betrifft eine Zahnbürste sowie eine Vorrichtung zur Beborstung einer solchen Zahnbürste.

Zahnbürsten weisen üblicherweise einen Bürstenkopf mit einem aus Borstenbündeln gebildeten Borstenfeld auf. Derartige Zahnbürsten sind seit langem bekannt. Die Borstenfelder solcher Zahnbürsten wurden im Laufe der Zeit in mannigfacher Weise gestaltet beziehungsweise weiterentwickelt, um einerseits die Reinigungswirkung und andererseits den Komfort für die Anwender zu verbessern. Eine dieser Entwicklungen betrifft die Verwendung von profilierten Borstenfeldern sowie von Borstenbündeln mit im Borstenbündel unterschiedlich weit hochstehenden Borsten.

US 5,926,897 offenbart eine Zahnbürste mit einem aus Borstenbündeln bestehenden Borstenfeld. Dieses Borstenfeld ist profiliert ausgestaltet und die einzelnen Borstenbündel weisen eine Anzahl von höherstehenden Borsten auf, die eine höherstehende Endfläche bilden.

DE 198 32 436 beschreibt ein Verfahren zum Herstellen von Bürsten, insbesondere Zahnbürsten. Das Verfahren zeigt die Bearbeitung von Borstenbündeln mit unterschiedlich langen Borsten auf, wobei die Bearbeitung der Borsten in verschiedenen Schritten mittels seitlicher Auslenkung durchgeführt wird.

US Design 425,306 zeigt ein ornamentales Borstenfeld mit im Wesentlichen dreiecksförmigen Borstenbündeln, an deren Ecken höherstehende Borsten angeordnet sind.

EP 1 425 989 offenbart Zahnbürsten mit zugespitzten Borsten sowie ein Verfahren zur Herstellung derselben. Die Borsten können dabei zwei gleiche zugespitzte Enden oder unterschiedliche, d.h., je ein nicht zugespitztes und ein zugespitztes Ende aufweisen.

WO 2009/000903 beschreibt eine Zahnbürste mit Borstenbündeln, wobei diese Borstenbündel einerseits kürzere nicht zugespitzte Borsten und andererseits längere zugespitzte Borsten aufweisen. Die längeren Borsten können im Borstenbündeln zufällig verteilt oder in einer inneren Region des Borstenbündels zentral angeordnet sein.

Aus dem Stand der Technik sind vielfältige Bemühungen bekannt, Zahnbürsten mit einem Borstenfeld zur Verfügung zu stellen, das Borsten mit unterschiedlich hochstehenden Borstenenden in einem Borstenbündel aufweist. Die entsprechenden Verfahren sind jedoch aufwendig oder lassen nur eine eingeschränkte Gestaltung des Borstenfeldes zu.

Der vorliegenden Erfindung liegt daher die Aufgabe zugrunde, eine Zahnbürste mit verbesserter Reinigungswirkung, insbesondere der Zahnzwischenräume, bei möglichst einfacher und prozesssicherer Herstellung der Zahnbürste zur Verfügung zu stellen.

Die Aufgabe wird gelöst durch eine Zahnbürste mit den Merkmalen des Anspruchs 1. Eine Vorrichtung umfasst die Merkmale des Anspruchs 10. Ein mit dieser Vorrichtung durchgeführtes Verfahren umfasst die Merkmale des Anspruchs 15. Vorteilhafte Ausführungsformen der vorliegenden Erfindung ergeben sich aus den abhängigen Ansprüchen, der Beschreibung und den Zeichnungen.

Die erfindungsgemässe Zahnbürste weist einen Handgriff und einen borstentragenden Kopfteil auf. Der Handgriff und der Kopfteil sind über einen Halsteil miteinander verbunden. Der Kopfteil trägt die Borsten und weist somit Borstenbündel auf, die ihrerseits eine Vielzahl von Borsten oder Borstenfilamente umfassen. Die Ausdrücke Borste, Filament oder Borstenfilament werden nachfolgend synonym verwendet und bezeichnen beide einen einzelnen Borstenfaden. Diese Borstenfäden werden mittels einem Extrusionsverfahren hergestellt und auf die richtige Länge zugeschnitten, bevor diese auf der Zahnbürste fixiert werden. Die Borstenfäden weisen aus diesem Grund in ihrem unbearbeiteten Zustand einen zylindrischen Querschnitt auf. Dieser Querschnitt ist meist kreisförmig, kann aber auch eine vom Kreis abweichende Form aufweisen. Die Borsten beziehungsweise die Borstenbündel erstrecken sich bevorzugt in senkrechter Richtung Kopfteil weg. In einer alternativen Ausführungsform können die erfinderischen Borstenbündel auch in einem Winkel vom Kopf erstrecken. Mindestens zwei der Borstenbündel des Kopfteils umfassen mindestens eine Borste, die ein Borstenende aufweist, welches relativ zu den Borstenenden der übrigen Borsten des Borstenbündels höher steht. Die mindestens eine Borste mit dem höherstehenden Borstenende ist innerhalb des Borstenbündels nicht zentrisch angeordnet. Sind mehrere Borsten mit höherstehendem Borstenende vorhanden, sind auch diese nicht zentrisch innerhalb des sie umfassenden Borstenbündels angeordnet. Im Weiteren sind die mindestens zwei Borstenbündel, die mindestens eine Borste mit höherstehendem Borstenende umfassen, vorzugsweise auf gegenüberliegenden Seiten einer (gedachten) Mittelängsebene der Zahnbürste angeordnet. Die (gedachte) Mittellängsebene steht rechtwinklig zur Borstenfläche im Kopf der Zahnbürste. Zudem verläuft die Mittellängsebene durch die Längsachse der Zahnbürste. Alle Borstenbündel des Kopfteils verlaufen vorzugsweise wenigstens annähernd parallel zur Mittellängsebene. Die zwei oder mehr Borstenbündel, die mindestens eine Borste mit höherstehendem Borstenende aufweisen, sind auf den gegenüberliegenden Seiten der Mittellängsebene so angeordnet, dass eine Hälfte, die mindestens eine Borste mit höherstehendem Ende umfasst, zur Mittellängsebene hin orientiert ist. Alternativ ist auch die umgekehrte Anordnung möglich, sodass die höherstehenden Enden von der Mittellängsebene weg orientiert sind.

In einer alternative Ausführungsform weist die erfindungsgemässe Zahnbürste die folgenden Merkmale auf: Zahnbürste mit einem Handgriff und einem borstentragenden Kopfteil, die durch einen Halsteil miteinander verbunden sind, wobei das Kopfteil aus einer Vielzahl von Borsten bestehenden Borstenbündel aufweist, dadurch gekennzeichnet, dass zwei oder mehr Borstenbündel mindestens eine Borste mit einem relativ zu den Borstenenden der anderen Borsten höherstehenden Borstenende aufweisen, wobei die mindestens eine Borste mit höherstehendem Borstenende innerhalb des Borstenbündels nicht zentrisch angeordnet ist, und wobei die zwei oder mehr Borstenbündel auf gegenüberliegenden Seiten einer Mittellängsebene der Zahnbürste angeordnet und alle Borstenbündel uniform mit einer die mindestens eine Borste mit höherstehendem Borstenende umfassenden Hälfte des Borstenbündels zur Mittellängsebene hin oder alternativ von ihr weg orientiert sind.

In einer bevorzugten Ausführungsform sind die Borstenbündel mittels eines Ankers am Kopfteil befestigt. Beborstungsverfahren, die Borstenbündel mittels Anker in entsprechenden Sacklöchern des Kopfteils befestigen, sind an sich bekannt. Mittels des Ankers werden die Borstenbündel symmetrisch oder asymmetrisch gefaltet und anschliessend in Sacklöchern fixiert. Durch die Faltung mittels des Ankers weist das Borstenbündel zwei Hälften auf, die je eines der Enden der gefalteten Borsten umfassen.

In einer weiteren bevorzugten Ausführungsform sind die Borsten mit höherstehendem Borstenende in der sie umfassenden Hälfte des Borstenbündels im Wesentlichen in einer Region dieser Hälfte angeordnet. Das heisst, die Borsten mit höherstehendem Borstenende sind nicht zufällig innerhalb der sie umfassenden Hälfte des Borstenbündels verteilt, sondern im Wesentlichen auf eine Region dieser Hälfte konzentriert. In dieser Region können auch Borsten vorhanden sein, die kein höherstehendes Borstenende aufweisen.

In einer bevorzugten Ausführungsform weisen die Anker alle die gleiche Orientierung auf. Sie sind beispielsweise parallel zur Mittellängsebene ausgerichtet.

In einer anderen Ausführungsform weisen die Anker mindestens zwei Orientierungen auf. Ein Teil der Anker kann wiederum parallel zur Mittellängsebene orientiert sein, während ein anderer Teil der Anker nicht parallel zur Mittellängsebene ausgerichtet ist, sondern mit dieser Ebene einen Winkel bildet beziehungsweise einschliesst. Vorzugsweise ist dieser Winkel im Bereich von 0° bis 90°, besonders bevorzugt im Bereich von 0° bis 30°.

In einer bevorzugten Ausführungsform sind die zwei oder mehr Borstenbündel, die mindestens eine Borste mit höherstehendem Ende aufweisen, spiegelbildlich zur Mittellängsebene angeordnet.

Die höherstehenden Borstenenden sind relativ zu den Borstenenden der übrigen Borsten 0.5 mm bis 5 mm höherstehend angeordnet. Bevorzugt stehen sie 2 mm bis 3 mm höher als die Borstenenden der übrigen Borsten.

Die Borstenbündel des Kopfteils können Borsten mit unterschiedlichen Borstenenden umfassen. Neben zylindrischen Borsten mit abgerundeten Enden können auch Borsten mit zugespitztem Ende vorhanden sein. Vorzugsweise ist Querschnitt kreisförmig, kann aber auch eine vom Kreis abweichende Form aufweisen.

In einer anderen Ausführungsform weist der Kopfteil neben konventionellen Borsten mit abgerundeten oder zugespitzten Borstenenden mindestens eine weichelastische Struktur auf. Diese weichelastische Struktur ist vorzugsweise als Reinigungs- und Massageelement ausgestaltet. Im Unterschied zu den Borsten, werden die weichelastischen Strukturen vorzugsweise zusammen mit dem Zahnbürstengriff mittels Spritzgusstechnik, zum Beispiel im Zwei- oder Mehrkomponenten-Spritzgussverfahren hergestellt.

Die erfindungsgemässe Vorrichtung zum Beborsten einer Zahnbürste umfasst eine Stopfvorrichtung mit einer Borstenzuführung und einem Borsten-Bündelförderer mit einer Kerbe. Dem Borsten-Bündelförderer ist ein Anschlag der Borstenbündel zugeordnet. Dabei sind der Anschlag und/oder die Borstenzuführung senkrecht zu einer Bewegungsebene des Bündelförderers verstellbar.

Der Anschlag ist dabei vorzugsweise zwischen 2 mm und 30 mm, besonders bevorzugt zwischen 4 mm und 10 mm, in seiner Höhe verstellbar.

Um eine möglichst gute Bewegung der Borsten zu gewährleisten, weist der Anschlag in einem Bereich, in welchem er mit Borsten in Kontakt kommt, eine polierte Oberfläche, das heisst eine polierte Unterstützungsfläche auf.

In einer bevorzugten Ausführungsform der Vorrichtung zum Beborsten von Zahnbürsten ist der Abstand A zwischen der Unterstützungsfläche des Anschlags und dem Bündelförderer konstant gehalten (parallele Ebenen). Das heisst, die Unterstützungsfläche des Anschlags und der Bündelförderer sind in parallelen Ebenen angeordnet.

In einer anderen Ausführungsform ist der Abstand A zwischen der Unterstützungsfläche des Anschlags und dem Bündelförderer variabel. Dabei nimmt der Abstand A in einer vom Stoffkanal wegführenden Richtung ab, das heisst, die Ebenen stehen in einem Winkel zueinander).

In einem Verfahren zur Herstellung einer Zahnbürste werden die Zahnbürsten mit einer oben beschriebenen Vorrichtung beborstet.

Die vorliegende Erfindung wird im Folgenden mit Bezug auf die Zeichnungen näher erläutert. Dabei zeigen rein schematisch:
- Fig. 1: die Ansicht eines Zahnbürstenkopfs in Richtung der Längsachse der Zahnbürste;
- Fig. 2: Borstenbündel in Richtung der Längsachse eines Ankers;
- Fig. 3: Borstenbündel in Querrichtung zur Längsachse des Ankers;
- Fig. 4: eine mögliche Anordnung der Anker in einem Kopfteil einer Zahnbürste mit weggelassenen Borsten;
- Fig. 5: eine vergrösserte Darstellung des Endbereiches des in Fig. 4 gezeigten Kopfteils mit dargestellten Borsten;
- Fig. 6: eine Aufsicht auf ein vergrössertes Borstenbündel aus Fig. 5;
- Fig. 7: eine Aufsicht auf einen Borsten-Bündelförderer und einer Borstenzuführung mit zwei Stoffkanälen;
- Fig. 8: eine mögliche Position eines verstellbaren Anschlags zu einem Borstenbündelförderer und einen Stoffkanal;
- Fig. 9: eine weitere mögliche Position eines verstellbaren Anschlags zu einem Borsten-Bündelförderer und einen Stoffkanal aus Fig. 8;
- Fig. 10: eine mögliche Position eines verstellbaren Anschlags zu einem Borsten-Bündelförderer und einem verstellbaren Stoffkanal;
- Fig. 11: eine weitere mögliche Position eines verstellbaren Anschlags zu einem Borsten-Bündelförderer und einem verstellbaren Stoffkanal aus Fig. 10;
- Fig. 12: einen Ausschnitt aus einer Verdrängerschiene der Vorrichtung;
- Fig. 13: einen Ablauf wie er mit der in Fig. 12 gezeigten Verdrängerschiene durchgeführt wird; und
- Fig. 14: die Form des Endbereichs je einer zylindrischen abgerundeten und einer zylindrischen zugespitzten Borste.

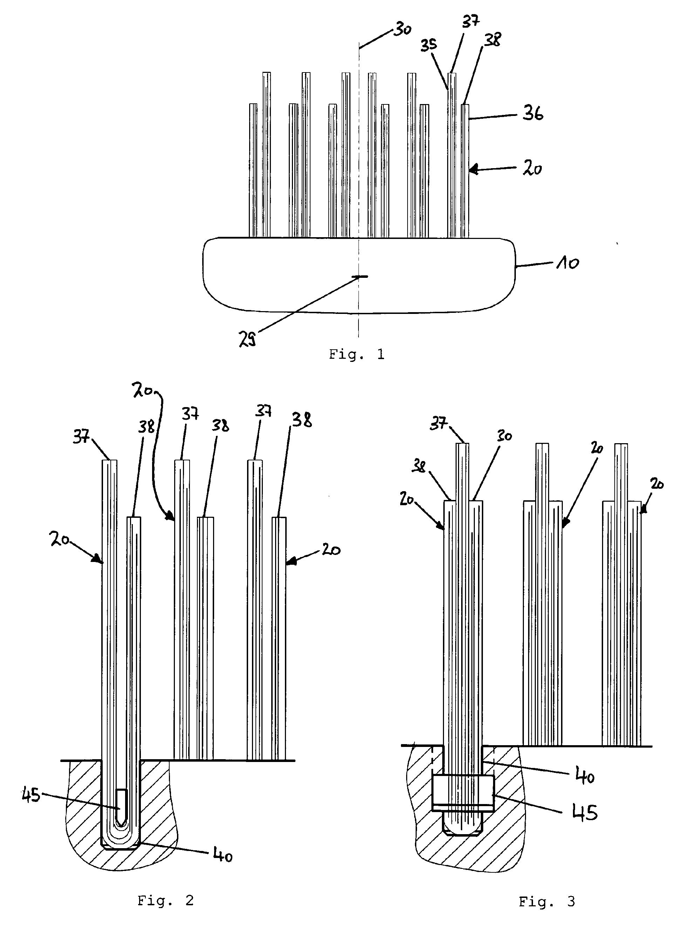

Fig. 1 zeigt eine Ansicht eines Zahnbürstenkopfs 10 in Richtung der senkrecht zur Betrachtungsebene stehenden Längsachse 29 der Zahnbürste. Die gezeigten Borstenbündel 20 sind in einer Querreihe auf dem Bürstenkopf 10 angeordnet und erstrecken sich wenigstens annähernd senkrecht vom Bürstenkopf 10 weg. Die Borstenbündel 20 umfassen Borsten 21 mit einem relativ zu den anderen Borsten höherstehenden Borstenende 37. In der gezeigten Ausführungsform ist die Borstenbündelhälfte 35 der Borstenbündel 20, welche die Borsten 21 mit höherstehenden Borstenenden 37 umfasst, auf den gegenüberliegenden Seiten der Mittellängsebene 30 jeweils zu dieser Mittellängsebene hin orientiert. Dementsprechend ist die Mehrheit der Borsten mit tieferstehenden Borstenenden 38 von der Mittellängsebene weg gewandt. Die gezeigten sechs Borstenbündel 20 haben demzufolge auf den gegenüberliegenden Seiten der Mittellängsebene 30 unterschiedliche Orientierungen, diese Charakteristik ist aufgrund der höherstehenden Borstenenden 37 gut erkennbar. Die Borsten 21 sind auf der ganzen Zahnbürste auf diese Weise angeordnet, ausser für Borstenbündel 20 welche auf der Längsachse 29 angeordnet sind. Diese können auf die eine oder andere Seite der Längsachse bzw. der Mittellängsebene hin orientiert sein. Im Profil der Borstenenden ergibt sich durch die Höherstellung und Tieferstellung gewisser Borstenenden gegenüber anderen Borsten zwei Ebenen von Enden, wobei die höherstehenden Borstenenden 37 besser in die Zahnzwischenräume eindringen als die tieferstehenden Borstenenden 38.

In der Darstellung der Fig. 1 wie auch der nachfolgenden Fig. 2 ist in den Borstenbündeln 20 der Abstand aufgrund des Ankers 45 jeweils relativ markant dargestellt. Die Zeichnungen sind schematisch, in der Realität "sträusseln" die Borsten etwas und dieser Abstand im am Ende des Borstenbündels oder auch schon auf der Ebene der tieferstehenden Borstenenden 38 nicht mehr sichtbar.

Ein konventionelles und bekanntes Verfahren zum Beborsten von Zahnbürsten ist das Befestigen der Borstenbündel 20 mittels Ankern 45 im Zahnbürstenkopf 10. In der Fig. 2 wird eine detaillierte Ansicht eines Borstenbündels 20 in Richtung der Längsachse eines Ankers 45 gezeigt. Der Anker 45 faltet das Borstenbündel 20 in zwei Teile. Beim Stopfen der Borstenbündel 20 in dafür vorgesehene Sacklöcher 40 des Kopfteils klemmt der Anker 45 die Borsten 21 im Sackloch fest. Dabei dringt der Anker 45 im Kunststoff der das jeweilige Sackloch 40 umgibt ein und verankert sich auf diese Weise an der jeweiligen Position. Die Borsten 21 werden in der Folge zwischen der Wand des Sacklochs und gewissen Oberflächen des Ankers 45 festgeklemmt. Die Faltung der Borsten 21 durch den Anker 45 passiert bei konventionellen Zahnbürsten symmetrisch, das heisst, dass auf beiden Seiten des Ankers 45 gleich viel an Borstenlänge vorhanden ist. Bei der vorliegenden Erfindung werden die Borstenbündel 20 asymmetrisch gefaltet. Die drei gezeigten Borstenbündel 20 mit den höherbeziehungsweise tieferstehenden Borstenenden (37, 38) sind im vorliegenden Beispiel alle gleich orientiert, d.h. die höherstehenden Borstenenden 37 sind immer auf derselben Seite des Ankers 45 realisiert. Es ist generell so, dass die höherstehenden Borstenenden 37 immer auf derselben Seite der Ankers 45 angeordnet sind. Es ist nicht so, dass ein Teil der höherstehenden Borstenenden auf der linken Seite des Ankers angeordnet sind und ein anderer Teil auf der rechten Seite des Ankers.

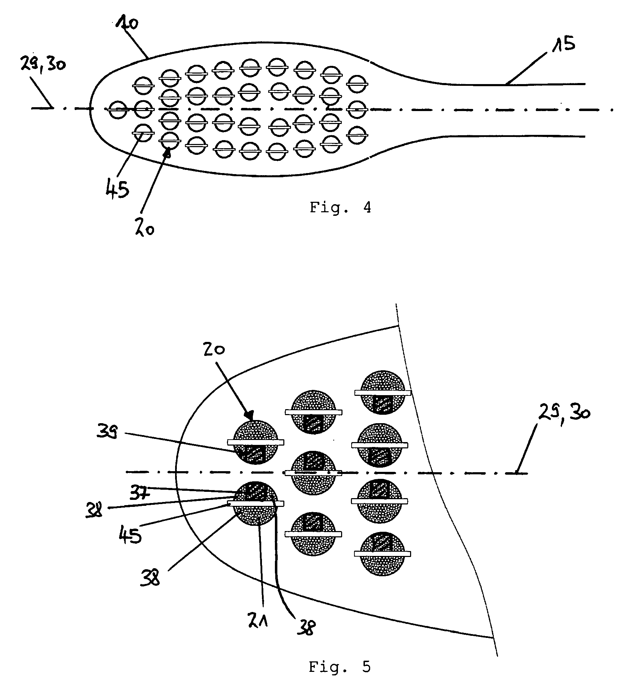

Fig. 3 zeigt Borstenbündel 20 in Querrichtung zur Längsachse des Ankers 45. Dabei ist der Schnitt durch das Sackloch 40 nur bei einem Borstenbündel 20 gezeigt. Aus dieser Ansicht in Kombination mit Fig. 2 wird deutlich, dass nur ein kleinerer Teil der Borsten 21 eines Borstenbündels 20 über Borstenenden 37 verfügt, die relativ zu den Borstenenden 38 der anderen Borsten 20 höher stehen. In Fig. 4 ist auch gut erkennbar, wie stark der Anker 45 in den das Sackloch umgebenden Kunststoff eindringt. Die Kante dieser Spur des Eindringens ist in der Figur gestrichelt dargestellt.

Die Längenverhältnisse in den Borstenbündel 20 der fertigen Zahnbürste sind so, dass das Borstenbündel 20 ab dem Austritt aus dem Sackloch 40 bis zu den höherstehenden Borstenenden 37 eine Länge vom 9 mm bis 15 mm vorzugsweise von 10 mm bis 12 mm hat. Die Länge ab Austritt aus dem Sackloch 40 bis zu den tieferstehenden Borstenenden 38 beträgt zwischen 6 mm und 11 mm vorzugsweise 8 mm bis 10 mm. Die höherstehenden Borstenenden sind relativ zu den Borstenenden der übrigen Borsten 0.5 mm bis 5 mm höherstehend angeordnet. Bevorzugt stehen sie 2 mm bis 3 mm höher als die Borstenenden der übrigen Borsten. In Fig. 4 wird eine mögliche Anordnung der Anker 45, vermittels welcher Borstenbündel 20 in einem Kopfteil 10 einer Zahnbürste befestigt sind, gezeigt. Der an den Kopfteil 10 angrenzende Halsteil 15 ist nur teilweise abgebildet. Dabei haben in der gezeigten Ausführungsform alle Anker 45 die gleiche Orientierung beziehungsweise Ausrichtung gegenüber der Längsmittelachse 29. Im vorliegenden Beispiel ist der Winkel, welcher vom Anker 45 und der Längsmittelachse 29 eingeschlossen wird 0°. Der Winkel kann vorzugsweise in einem Bereich zwischen 0° und 30° liegen. Die Borstenbündel 20 sind für die Ausführung der Erfindung in Querreihen auf dem Kopfteil 10 angeordnet. In Fig. 4 sind die Borsten 21 aus darstellungstechnischen Gründen nicht gezeigt.

Fig. 5 zeigt eine vergrösserte Darstellung des freien Endbereiches des in Fig. 4 gezeigten Kopfteils, diesmal mit gezeigten Borsten 21. Wiederum sind die in Querreihen angeordnete Borstenbündel 20 zu erkennen. Der Anker 45 des Borstenbündels 20 teilt dieses Borstenbündel in der Aufsicht in zwei Hälften. Die Hälfte des Borstenbündels 20, welche die Borsten 21 mit höherstehenden Borstenenden 37 beinhaltet, ist dabei zur Mittellängsebene 30 hin orientiert. Die höherstehenden Borsten 37 sind in der Figur schraffiert dargestellt. Die von der Mittellängsebene 30 abgewandte Hälfte des Borstenbündels 20 umfasst nur Borsten 21 mit tieferstehenden Borstenenden 38. Ebenfalls zu erkennen ist in dieser Ansicht, dass die Hälfte der Borstenbündel 20 mit Borsten, die ein relativ zu den anderen Borsten höherstehendes Borstenende 37 aufweisen, auch Borsten mit tieferstehendem Borstenende 38 umfassen. Die zur Mittellängsebene 30 parallel ausgerichteten Anker 45 ergeben bei den in Querreihen auf dem Kopfteil 10 angeordneten Borstenbündeln 20 eine spiegelbildliche Anordnung der Borstenbündel 20. Davon ausgenommen sind Borstenbündel, durch welche die Mittellängsebene 30 hindurchgeht. In solchen Borstenbündeln 20 weisen die Borsten 21 mit höherstehenden Borstenenden 37 entweder auf die eine oder auf die andere Seite der Mittellängsebene 30.

Die Anordnung der höherstehenden und tieferstehenden Borstenenden (37, 38) ist auch umgekehrt orientiert möglich, sodass die höherstehenden Borstenenden 37 von der Mittellängsebene 30 weg gerichtet sind und die tieferstehenden Borstenenden 38 auf die Mittellängsebene 30 zu gerichtet sind. Dabei ist ein wichtiger Punkt, dass der Anker 45, welcher die Borstenbündel im Bürstenkörper fixiert auch einen Winkel zur Längsachse einnehmen kann. In diesem Fall spricht man von zur Mittellängsebene 30 orientierten höherstehenden Borstenenden 37, wenn sie im Winkel d.h. der Fläche zwischen 0° und 89.99° zwischen der Ankerlängsachse und der Mittellängsebene 30 angeordnet sind. Umgekehrt wird von der Mittellängsebene 30 weg orientierten höherstehenden Borstenenden 37 gesprochen, wenn die tieferstehenden Borstenenden 38 wie eben beschrieben angeordnet sind.

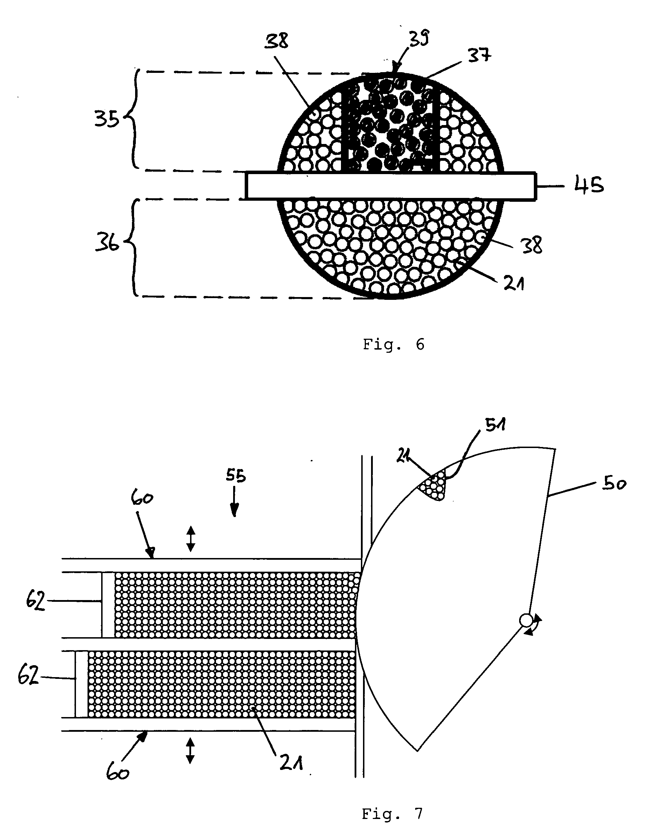

Fig. 6 zeigt eine Aufsicht auf ein einzelnes, vergrössertes Borstenbündel 20 aus Fig. 5. Der Anker 45 teilt das Borstenbündel 20 in zwei Borstenbündelhälften 35 und 36. Dabei umfasst die Borstenbündelhälfte 36 nur Borsten 21 mit tieferstehenden Borstenenden 38, das heisst, dass alle Borsten 21 in der Borstenbündelhälfte 36 gleich weit hoch stehen. Im Gegensatz dazu sind in der Borstenbündelhälfte 35 sowohl Borsten 21 mit höherstehenden Borstenenden 37 als auch Borsten 21 mit tieferstehenden Borstenenden 38 vorhanden. Die Borsten 21 mit höherstehenden Borstenenden 37 sind im Beispiel in einer zusammenhängenden Region 39 der Borstenbündelhälfte 35 angeordnet. In Fig. 7 wird eine Aufsicht auf einen Borsten-Bündelförderer 50 und einer Borstenzuführung 55 mit zwei Stoffkanälen 60 gezeigt. Die Borsten 21 werden in den beiden Stoffkanälen 60 durch Drücker 62 zum Borsten-Bündelförderer 50 hin gedrückt. Der Borsten-Bündelförderer 50 ist um eine Achse drehbar gelagert, um welche er eine Vorwärts-Rückwärts-Drehbewegung ausführt. Das Mass der Drehung wird durch verschiedene Punkte definiert, die die Kerbe 51 anlaufen muss. Zum einen ist dies der Umkehrpunkte am Ende der Stoffkanäle 60, zum andern der Punkt an welchem das Bündel mit dem Anker in das Sackloch 40 gestanzt wird. Fährt die Kerbe 51 während der Drehung dem Stoffkanal 60 beziehungsweise entlang und ist sie in diesem Moment nicht gefüllt, füllt sie sich mit Borsten 21. Durch das Entfernen von Borsten am Ende des Stoffkanals 60, das heisst, am entgegengesetzten Ende des Drückers 62, werden die Borsten 21 im Stoffkanal 60 in Richtung des Borsten-Bündelförderers 50 transportiert. Die Borsten 21 aus den verschiedenen Stoffkanälen 60 können verschiedene Eigenschaften beispielsweise verschiedene Farben haben. Um die Borsten aus dem einen oder anderen Stoffkanal 60 zu nehmen, muss sich der entsprechende Stoffkanal 60 während der Phase des

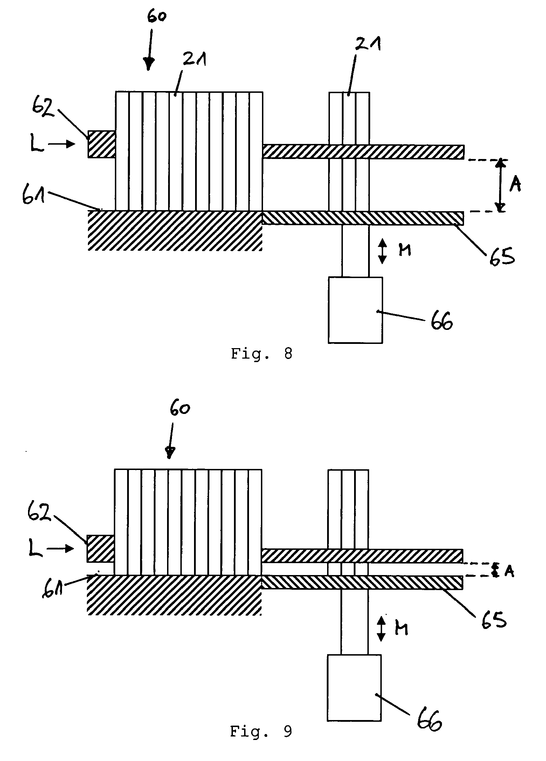

Verfahrens in welcher das rückwärtige Ende des Borsten-Bündelförderers 50 den Stoffkanal 60 verschliesst seitlich bewegen, damit der richtige Stoffkanal 60 zum Füllen der Kerbe 51 bereit steht. Fig. 8 zeigt eine mögliche Position eines verstellbaren Anschlags 65 zu einem Borstenbündelförderer 50 und einen Stoffkanal 60. Dies könnte beispielsweise im oberen Stoffkanal 60 aus Figur 7 der Fall sein.

In Fig. 8 fördert der Drücker 62 die Borsten 21 in Förderrichtung L zum Borsten-Bündelförderer 50. Der Anschlag 65 ist gegenüber dem Borsten-Bündelförderer 50 in seiner Höhe, d.h. in einer senkrecht zur Bewegungsebene des Borsten-Bündelförderers 50 bzw. zu dessen Drehachse oder senkrecht zu den Borsten 21 im Stoffkanal 60 stehenden Richtung M, durch ein Antriebsmittel 66 verstellbar angeordnet. Wenn Borsten 21 vom Stoffkanal 60 zum Borsten-Bündelförderer 50 transportiert werden, ist der verstellbare Anschlag 65 im vorliegenden Fall auf der Höhe des Stoffkanalbodens 61 positioniert. Dadurch sind die Borsten 21 vom Stoffkanal 60 her bis sie aus der Kerbe 51 entfernt werden durchgehend an mindestens einem ihrer Enden geführt bzw. unterstützt, damit sie nicht aus der Kerbe 51 fallen oder sich in der Kerbe 51 verklemmen. Der Abstand A zwischen dem Borsten-Bündelförderer 50 und dem Anschlag 65 ist konstant. In der gezeigten Position des Anschlags 65 befindet sich der Borsten-Bündelförderer 50 in einer ersten Position relativ gegenüber der Borsten 21 bzw. deren Länge.

In Fig. 9 wird der untere Stoffkanal 60 aus dem Beispiel aus Fig. 7 dargestellt. Die beiden in den Fig. 8 und 9 gezeigten Stoffkanäle 60 beziehungsweise die entsprechenden Stoffkanalböden 61 sind gegenüber dem Borsten-Bündelförderer 50 auf verschiedenen Ebenen angeordnet. Jede der Anordnungen steht für eine Orientierung der höherstehenden Borstenenden 37 in der fertigen Zahnbürste. Dabei ist der Borsten-Bündelförderer 50 aber immer an derselben Position angeordnet, er ist von der Position her fixiert. Die Fig. 9 zeigt eine weitere mögliche Position eines verstellbaren Anschlags zu einem Borsten-Bündelförderer und einem Stoffkanal 60. Die Borsten 21 befinden sich relativ gegenüber dem Borsten-Bündelförderer 50 in einer anderen Position als die in Fig. 8 gezeigten. In der gezeigten Position des Anschlags 65 wurde der Abstand zwischen dem Anschlag 65 und dem Borsten-Bündelförderer 50 verringert, so dass sich der Borsten-Bündelförderer 50 bzw. die Kerbe 51 nun relativ gegenüber den Borsten 21 nicht mehr an derselben Stelle wie in Fig. 8 gezeigt befindet. Die Borsten 21 werden wiederum in der Förderrichtung L zum Borsten-Bündelförderer 50 hin transportiert.

Die durch die Vorrichtungen aus Fig. 8 und 9 in den Zahnbürstenkopf 10 eingebrachten Borsten 21 besitzen bezüglich der Mittellängsebene 30 eine ganz bestimmte Orientierung. Alle durch die in Fig. 8 gezeigte Vorrichtung eingebrachten Borsten 21 haben eine bestimmte Orientierung gegenüber der Mittellängsachse 30 der Zahnbürste. Die durch die in Fig. 9 gezeigte Vorrichtung eingebrachten Borsten 21 haben die gegenteilige Orientierung. So werden beispielsweise die Borsten 21 der in Fig. 1 gezeigten Zahnbürste aus zwei solchen Vorrichtungen gespendet. Die Borsten 21 auf der linken Seite der Mittellängsebene 30 können beispielsweise durch die in Fig. 8 gezeigte Vorrichtung gespendet werden, jene auf der rechten Seite durch die Vorrichtung in Fig. 9. Demzufolge sind alle Borstenbündel 20, die von der einen Vorrichtung gespendet werden in derselben Richtung orientiert. Die in diesem Absatz jeweils als einzelne Vorrichtung beschriebenen Anordnungen von Stoffkanal 60, Anschlag 65 und Borsten-Bündelförderer 60 in Fig. 8 und 9 bilden zusammen eine einzige Vorrichtung wie sie beispielsweise in Fig. 7 dargestellt ist. Eine Figur (Fig. 8 oder 9) zeigt den oberen Stoffkanal 60, die andere den unteren Stoffkanal 60. Welcher Stoffkanal 60 welche Konfiguration hat, spielt für das Ausführen des erfindungsgemässen Verfahrens keine Rolle.

Zentral für die vorliegende Erfindung ist das sogenannte asymmetrische Stanzen. Das heisst dass der Anker 45 gegenüber der Länge der Borsten 21 nicht mittig eingebracht wird wie dies im Normalfall bei Borstenbündeln mit durchwegs gleich hohen Borstenenden der Fall ist. In Bezug auf den Borsten-Bündelförderer 50, wie er beispielsweise in Fig. 8 und 9 gezeigt ist, wird der Anker 45 direkt oberhalb von diesem eingebracht. Da der Borsten-Bündelförderer 50 in den beiden Figuren bezüglich der Borstenlänge zwei verschiedene Positionen einnimmt, ergeben sich zwei unterschiedliche Asymmetrien. Einmal steht die Enden auf der einen Seite des Ankers höher, einmal die anderen. In Fig. 8 beispielsweise wird der Anker 45 näher am oberen Ende der Borsten 21 eingebracht, das heisst dass die Borstenenden, die den Stoffkanalboden 61 berühren höher stehen. In der Fig. 9 ist es genau umgekehrt, die Borstenenden die den Stoffkanalboden 61 berühren bilden die tiefer stehenden Borstenenden, wenn sie in den Zahnbürstenkopf 10 eingebracht worden sind.

Der verstellbare Anschlag 65 ist in Richtung M zwischen 2 mm und 30 mm vorzugsweise zwischen 4 mm und 10 mm verstellbar. Die Oberfläche des Anschlags 65 ist zudem eine wichtige Komponente im Verfahren. Um die optimale Förderung der Borsten 21 zu gewährleisten ist die Oberfläche des Anschlags 65 vorzugsweise poliert oder hochglanzpoliert. Allenfalls ist es auch möglich eine Beschichtung auf die Oberfläche aufzutragen, die die Oberfläche verbessert. Ziel der Oberflächenbehandlung oder -bearbeitung ist es, den Reibungswiderstand zwischen den Borsten 21 und dem Anschlag 65 zu minimieren und auf diese Weise eine gute, prozesssichere Förderung zu erreichen.

Der erfindungsgemässe, verstellbare Anschlags 65 aus Fig. 8 und 9 erst ermöglicht das Herstellen einer Zahnbürste mit asymmetrisch gestanzten Borstenbündeln 20 in mehreren Orientierungen oder mit verschiedenen Abständen der höherstehenden und tieferstehenden Borstenenden 37, 38, wie sie beispielsweise im Zusammenhang mit Fig. 1 erklärt, wird auf einer Beborstungsmaschine mit einer Stanzeinheit (Beborstungseinheit). Das heisst, dass aufgrund des erfindungsgemässen verstellbaren Anschlags vorteilhafterweise nur eine Anker-Einbring-Einrichtung nötig ist.

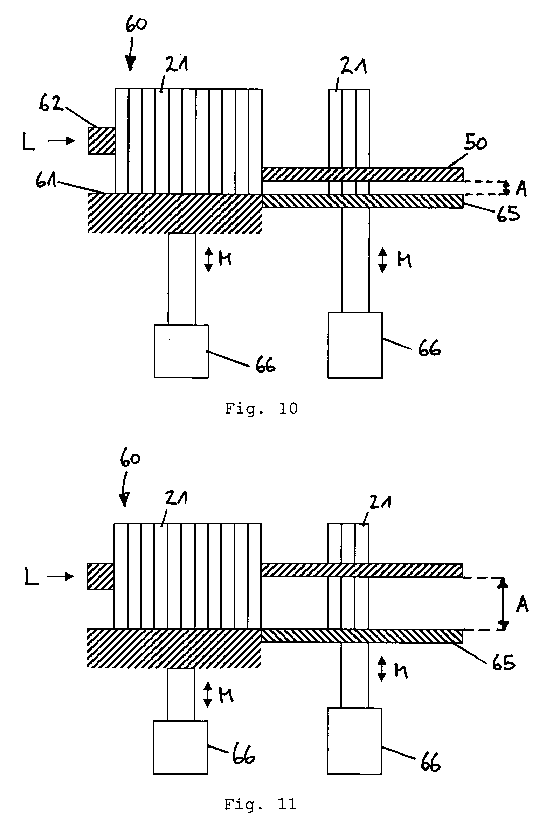

In den Fig. 10 und 11 wird eine weitere Ausführungsform der erfindungsgemässen Vorrichtung gezeigt. Dadurch, dass sowohl die Stoffkanäle 60 wie auch der Anschlag 65 in der Höhenposition verstellt werden können, ergeben sich weitere Möglichkeiten der Borstenfeldgestaltung. Die Konstante in dieser Anordnung ist wie schon in der Fig. 8 und 9 gezeigten Ausführungsform der Borsten-Bündelförderer 50, welcher von der Position her fix angeordnet ist. Die Draufsicht auf die in dieser Weise aufgebaute Vorrichtung ist die gleiche wie in Fig. 7.

Fig. 10 zeigt eine mögliche Position eines verstellbaren Anschlags 65 zu einem Borsten-Bündelförderer 50 und einem verstellbaren Stoffkanal 60. Im Unterschied zu den in den Fig. 8 und 9 gezeigten Vorrichtungen sind in diesem Fall sowohl der Anschlag 65 durch ein Antriebsmittel 66 als auch der Stoffkanal 60, welchem ebenfalls ein Antriebsmittel 66 zugeordnet ist, in ihrer Höhe verstellbar. Die Richtung M, in welcher die Höhe des Anschlags 65 und/oder des Stoffkanals 60 verstellbar ist, steht rechtwinklig zur Bewegungsebene des Borsten-Bündelförderers 50. Drücker 62 befördern die Borsten 21 in der Förderrichtung L.

In Fig. 11 wir eine weitere mögliche Position eines verstellbaren Anschlags zu einem Borsten-Bündelförderer und einem verstellbaren Stoffkanal aus Fig. 10. Dabei sind wiederum sowohl der Stoffkanal 60 als auch Anschlag 65 unabhängig voneinander durch Antriebsmittel 66 in ihrer Höhe senkrecht zur Bewegungsebene des Borsten-Bündelförderers 50 verstellbar angeordnet. Der Anschlag 65 wie auch die Stoffkanäle (60) sind hierbei in der Höhe in Richtung M zwischen 2 mm und 30 mm vorzugsweise zwischen 4 mm und 10 mm verstellbar.

Die in der Förderrichtung L durch Drücker 62 transportierten Borsten 21 werden einerseits durch den Stoffkanalboden 61 und andererseits durch den Anschlag 65 gestützt und so gegen ein Verrutschen in senkrechter Richtung gegenüber der Förderrichtung L gesichert. Speziell an dieser Anordnung ist, dass der Drücker in der Höhe nicht angepasst wird. Er wird immer in derselben Ebene relativ zum Stoffkanalboden 61 gehalten, unabhängig von der Position des Borsten-Bündelförderers 50. Deshalb ist es je nach Ausgestaltung der Verhältnisse von Borsten-Bündelförderer 50 zur Borstenlänge d.h. je nach Position des Förderers nötig, zusätzliche Stützmittel am Ende des Stoffkanals 60 oder oberhalb der Borstenenden anzubringen, die das Funktionieren des Prozesses aber nicht einschränken. Ansonsten ist es je nachdem möglich, dass die Borsten aufgrund des Drucks vom Drücker her senkrecht aus dem Stoffkanal 60 gedrückt werden.

Im Weiteren muss unter Umständen in den gezeigten Situationen gemäss den Fig. 10 und 11 allenfalls ein weiteres Element hinzugefügt werden, welches über dem Stoffkanal 60 liegt und verhindert, dass die Borsten 21 bei der Bewegung des Stoffkanals 60 durch Antriebsmittel 66 senkrecht aus dem Kanal rutschen. Ob eine solche Anpassung erfolgen muss, hängt von den Eigenschaften der Borsten 21 (Oberflächenreibung etc.) ab.

Die Verstellbarkeit der Stoffkanäle 60 und des Anschlags 65 kann verschieden gestaltet sein. Beispielsweise können die beiden Stoffkanäle 60 durch ein Antriebsmittel 66 in der Höhe verstellt werden. Weiter ist es aber auch möglich die Stoffkanäle 60 mit individuellen Antriebsmitteln 66 auszugestalten und sie so unabhängig voneinander einstellbar zu machen, was jedoch eine konstruktive Anpassung der Anordnung der Stoffkanäle notwendig machen würde. Unter dem Gesichtspunkt der Kosten bringt diese zweite Variante jedoch keine wesentlichen Vorteile, da die Variabilität der Funktion nicht zunimmt. Der Anschlag muss allerdings immer individuell, das heisst, unabhängig von den Stoffkanälen 60, einstellbar sein, da dies erfindungsmäss wesentlich ist. Durch die Möglichkeiten der Individualisierung, die sich durch die verschiedenen Einstellmöglichkeiten an der erfindungsgemässen Vorrichtung ergeben, können Bürsten mit sehr speziellen Borstenbildern geschaffen werden. Beispielsweise können auf diese Weise auf einer Zahnbürste Borstenbündel mit verschiedenen Längen zwischen den höherstehenden und den tieferstehenden Borstenenden 37, 38 erreicht werden. Die Antriebsmittel 66 können verschieden ausgestaltet sein. Möglichkeiten für das Antriebsmittels 66 sind beispielsweise Motoren (Schrittmotoren, etc.), pneumatische oder hydraulische Zylinder, oder ähnliches. Der Anschlag 65 wird üblicherweise nur verstellt, wenn der Borsten-Bündelförderer 50 leer ist, das heisst wenn kein Borstenbündel 20 in der Kerbe 51 fortbewegt wird.

Es ist wichtig, dass die verschiedenen eingesetzten Mittel, die mit Borsten 21 in Kontakt kommen, vom Stoffkanal 60 bis zum Einbringen der Borsten 21 in die Sacklöcher, sehr genau ausgestaltet sind und deren Oberfläche optimiert wurde, beispielsweise durch hochglanzpolieren. Betreffend den Anschlag wurde dies bereits früher im Text beschrieben. Damit wird zusätzlich erreicht, dass die Borstenbündel 20, beziehungsweise die Borsten 21 in den Borstenbündeln 20 sehr genau ausgerichtet in die Sacklöcher 40 eingebracht werden. Dies ist wichtig, da die tieferstehenden Borstenenden 38 nicht geschnitten werden. Daher müssen diese Borstenenden bereits beim Einbringen ins Sackloch die nötige Ausrichtung relativ zueinander haben. Weniger Reibungswiderstand bedeutet in diesem Fall weniger Verschiebungen der einzelnen Borsten 21.

Eine weitere Ausgestaltungsmöglichkeit des Verfahrens besteht darin, beispielsweise den in Fig. 8 bis 11 gezeigten Anschlag 65 speziell zu formen. Dabei könnte der Anschlag 65, der in den beschriebenen Fällen eben ausgestaltet ist (geradlinige Fortführung des Stoffkanalbodens 61 parallel zum Borsten-Bündelförderer 50), als gewinkelte angeordnete Ebene gestaltet sein. Die Ebene wäre in diesem Fall so gestaltet, dass sie nach dem stetigen Übergang vom Stoffkanalboden 61 entlang der Bewegungsrichtung des Borstenbündels in der Kerbe 51 abnimmt. Der beschriebene Abstand A wäre somit nicht mehr konstant. Damit könnte erreicht werden, dass die asymmetrische Stanzung beispielsweise extremer ausgeführt werden könnte. Es wäre jedoch nötig, spezielle Massnahmen zu treffen, damit dies für beide Orientierungs-Richtungen der Borstenbündel 20 im Zahnbürstenkopf 10 möglich würde. Da die Borstenenden, die während der Förderung am Anschlag 65 anliegen, in einem Fall in der fertigen Zahnbürste die höherstehenden Borstenenden 37 und im anderen Fall die tieferstehenden Borstenenden 38 sind. Mögliche Massnahmen hierbei wären beispielsweise, dass sich der Anschlag 45 zusätzlich zur Höhenbewegung entlang der Bewegungsrichtung M noch in einer anderen Richtung bewegt und auf diese Weise ein anderes Profil in die Bewegungskurve des Borstenbündels in der Kerbe 51 auf dem Anschlag ergibt.

Im Weiteren ist es auch möglich, dass der angetriebene Anschlag 65 während des Förderns eines Borsten-Bündels verstellt würde. Dabei wäre die Verstellung der Höhe gegenüber dem Borsten-Bündelförderer in beide Richtungen möglich und die verschiedenen Orientierungen der höherstehenden und tieferstehenden Borstenbündel 37, 38 könnten damit bedient werden.

Um Zahnbürsten mit verschieden grossen Borstenbündeln 20 zu schaffen, könnte im Prozess ein Borsten-Bündelförderer 50 eingesetzt werden, in welchem eine variable Kerbe 51 eingebracht ist. Eine variable Kerbe 51 könnte während des Prozesses, wenn sie nicht gefüllt ist, in ihrer Grösse angepasst werden, sodass letztlich mehr oder weniger Borsten 21 aus dem Stoffkanal 60 in die Sacklöcher transportiert werden.

Die Ausgestaltung der Zahnbürste beziehungsweise die Orientierung der höherstehenden und tieferstehenden Borstenenden 37, 38 sind bedeutsam für die Prozesseffizienz oder auch für die Zykluszeit des Beborstens der Zahnbürste. Vorzugsweise ist die Orientierung der Borstenbündel so festgelegt, dass im Beborstungsprozess immer mehrere Bündel gleicher Orientierung in den Bürstenkopf eingebracht werden können. Dadurch müssen der Anschlag 65 und auch die Stoffkanäle 60 nicht nach jedem Borstenbündel umgestellt werden. Der Prozess wird schneller und auch weniger fehleranfällig.

Im Beborstungsprozess der Zahnbürsten werden die Borsten 21, nachdem sie im Zahnbürstenkopf 10 befestigt sind, nachbearbeitet. Das heisst sie werden unter anderem profiliert. Ein Oberflächenprofil wird zum Beispiel erreicht durch wegschneiden oder wegfräsen der zu langen Teile der Borsten. Im Weiteren werden sie anschliessend gerundet.

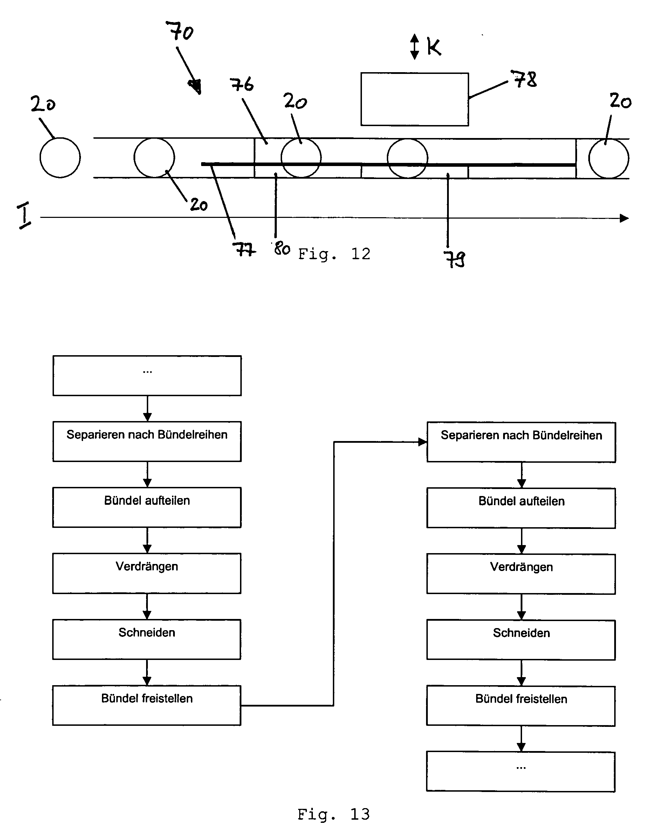

Die weiteren folgenden Schritte der Profilierung wurden ebenfalls weiter entwickelt und ergänzen die Erfindung. Im Zusammenhang mit Fig. 12 wird dies im Detail erläutert. Für die Profilierung der Zahnbürsten werden in den Bearbeitungsschritten sogenannte Verdrängerschienen 70 eingesetzt, die die Borsten 21 der Zahnbürste teilweise verdrängen, sodass die zu bearbeitenden Borsten 21 besser zugänglich sind. Borstenbündel 20 werden erfindungsgemäss in einem ersten Schritt an ihren höherstehenden Borstenenden 37 profiliert. Eine Profilierung der Borstenbündelhälfte 36, welche nur aus tieferstehenden Borstenenden 38 besteht, wird vorzugsweise nicht vorgenommen. Ansonsten wäre eine entsprechende Verdrängung der höherstehenden Borstenenden 37 notwendig.

Fig. 12 zeigt einen Ausschnitt aus einer Verdrängerschiene 70 der Vorrichtung zum Beborsten von Zahnbürsten. Ein einzelnes Borstenbündel 20 wird in Bewegungsrichtung I in einen Borstenbündelkanal 75 eingeführt. Der Borstenbündelkanal 75 läuft parallel zur Bewegungsrichtung I und die Borstenbündel 20 werden in Bewegungsrichtung fortbewegt. Dabei greift eine parallel zur Längsrichtung der Borstenbündel 20 angeordnete Kante 77 in das Borstenbündel 20 ein und teilt dieses in zwei Teile. Die beiden Teile sind nicht gleich gross. Der grössere Teil des Borstenbündels 20 wird nun durch den Verdrängerkanal 76 durchgeführt. Dabei werden die freien Borstenenden verdrängt, das heisst, abgelenkt und stehen während des Durchführens durch den Kanal nicht mehr hoch. Der Verdrängerkanal 76 ist in diesem Bereich vom Querschnitt her ähnlich einem U-Profil oder V-Profil geformt das heisst er ist auf drei Seiten geschlossen und kann die Borsten 21 auf diese Weise aufnehmen. Der weniger grosse Teil des Borstenbündels 20 wird nach dem Aufteilen des Borstenbündels 20 durch die Kante 77 in einem ersten Teil ebenfalls verdrängt und im Ordnungskanal 80 geführt, anschliessend während dem Durchlauf aber gleich wieder freigestellt. Die Freistellung passiert im Freistellungsbereich 79 während des Durchführens des Borstenbündels 20 durch den Borstenbündelkanal 75. Die Borsten 21 des Borstenbündels 20 werden in diesem Bereich nicht verdrängt, so dass die freien Borstenenden im Wesentlichen senkrecht hochstehen und von einem Schneidmesser 78 oder einem anderen Bearbeitungsmittel, beispielsweise einem Fräser, das sich rechtwinklig zur Bewegungsrichtung I des Borstenbündels 20 entlang der Bewegungsrichtung K des Schneidmessers vor und zurück bewegt, auf die gewünschte Länge verkürzt werden. Anschliessend werden die nicht verdrängten Borsten 21 wiederum in einen Verdrängerkanal geführt, bevor sie wieder freigestellt werden. Diese Verdrängung der bearbeiteten Borsten 21 hat keine bearbeitungstechnischen Gründe. Die Verdrängung muss jedoch eingebaut werden, um die Kante 77 zu stabilisieren. Damit wird erreicht, dass die Kante 77 während dem Bearbeiten weniger vibriert oder aufgrund der Beanspruchung (temporär) verbogen wird und somit die Bearbeitung erschwert, beziehungsweise die Bündelaufteilung nicht mehr konstant passiert, da der Eingriff der Kante 77 in das Borstenbündel 20 variiert.

Eine komplette Verdrängerschiene 70 ist eine Aneinanderreihung von mehreren Ausschnitten gemäss Fig. 12, wobei vorzugsweise zwei solche Ausschnitte aneinander gereiht werden. Der Unterschied zwischen den beiden nacheinander folgenden Ausschnitte kann darin liegen, dass die Kante 77 relativ zum Bündel anders positioniert wird, somit anders verdrängt werden kann. Zudem kann der Verdrängerkanal 76 in Längsrichtung auf der anderen Seite des Borstenbündelkanals 75 angeordnet werden.

Für die Herstellung von Borstenbündeln 21 gemäss Fig. 1 - 3 wird der Verdrängerkanal im ersten Teil analog der in Fig. 12 gezeigten Variante benötigt und im zweiten Teil quasi gespiegelt. Das heisst die Kante 77 wird so angebracht, dass das kleinere Teil auf der oberen Seite (siehe Fig. 12) zu liegen kommt. Zusätzlich ist der Verdrängerkanal 76 auf in Längsrichtung des Borstenbündelkanals 75 auf der anderen Seite angebracht. Die Verhältnisse der Aufteilung der Borstenbündel 21 durch die Kante 77 ist in beiden Schritten dieselbe, nur eben anders orientiert bzw. gespiegelt.

In Fig. 13 wird ein Ablauf wie er mit der in Fig. 12 gezeigten Verdrängerschiene durchgeführt wird, in seinen einzelnen aufeinanderfolgenden Schritten gezeigt. In einem ersten Schritt werden die in Reihen angeordneten Borstenbündel separiert durch Einführen in den Borstenbündelkanal. Anschliessend wird jedes einzelne Borstenbündel in zwei Teile aufgeteilt, wobei der grössere Teil des aufgeteilten Bündels verdrängt wird und daher dem Schneidmesser nicht zugänglich ist. Für die Schaffung von Borstenbündeln 21 gemäss Fig. 1 - 3 umfasst der grössere, verdrängte Teil des Borstenbündels ungefähr zwei Drittel der Borsten des Borstenbündels generell um fasst der verdrängte Teil des Borstenbündels zwischen 55% und 85% vorzugsweise zwischen 55% und 70%. Der kleinere, nicht verdrängte Teil des Borstenbündels umfasst im Fall von Fig. 1 - 2 ungefähr einen Drittel der Borsten des Borstenbündels. Der nicht verdrängte und daher hochstehende Teil des Borstenbündels wird in einem nächsten Schritt auf die gewünschte Länge geschnitten. Nach dem Schneidvorgang wird das Borstenbündel wieder freigestellt. Das heisst, der verdrängte Teil wird aus dem Verdrängerkanal hinausgeführt. Nachdem das Borstenbündel freigestellt wurde wiederholt sich der gesamte Vorgang, so dass jedes Borstenbündel zweimal geschnitten wird. Dabei werden in den beiden Vorgängen jeweils unterschiedliche Teile des Borstenbündels verdrängt, wobei gewisse Bereiche in beiden Vorgängen verdrängt und demzufolge nicht geschnitten werden.

Hinsichtlich des Verdrängens ist zu, dass sich die Aufteilung der Borsten durch die Kante 77 in sehr kleinen Dimensionen bewegt. Zudem ist die Form, wie die Borsten aus dem Sackloch 40 hervorstehen in gewissem Ausmass zufällig. Deshalb ist es nicht möglich, genau zu definieren, wie viele Borsten beispielsweise verdrängt werden oder auch wie viele Borsten im späteren bearbeiteten Fall höherstehende Borstenenden 37 aufweisen. Die Zahlen bewegen sich immer in gewissen Bereichen.

Für die konkrete Realisierung von Zahnbürsten mit Querreihen gemäss Fig. 1 heisst dies, dass die Zahnbürste so orientiert ist, dass die Längsachse 29 der Zahnbürste senkrecht zur Bewegungsrichtung I angeordnet wird. Mehrere Borstenbündelkanäle sind direkt nebeneinander angeordnet, sodass eine Zahnbürste, bestehend aus einer Vielzahl von Reihen, beziehungsweise deren Borstenbündel 20 mindestens teilweise parallel bearbeitet werden.

Werden Zahnbürsten mit Reihen geschaffen, welche in einem von 90° abweichenden Winkel zur Längsachse 29 der Zahnbürste angeordnet sind, muss die Bürste für die Bearbeitung anders orientiert in die Verdrängerschiene 70 eingebracht werden. Damit die Verarbeitung möglich ist, wird die Längsachse der Zahnbürste vom Winkel her so angeordnet, dass die Richtung der Reihen parallel ist zur Bewegungsrichtung I, d.h. der Richtung der Borstenbündelkanäle.

Wichtig bei derartigen Zahnbürsten ist, dass alle Borstenbündel 20, die zu Borstenbündeln 20 mit höherstehenden und tieferstehenden Borstenenden bearbeitet werden sollen, in Querreihen angeordnet sind, die sich nicht überschneiden. Die Symmetrien werden in diesem Fall gegenüber winklig zur Längsachse 29 angebrachten Achse erzielt.

Um die Darstellung des Ausschnitts der Verdrängerschiene 70 in Fig. 12 und den Vergleich mit dem Borstenbündel 20 gemäss Fig. 6 und die entsprechenden Bearbeitungsschritte noch weiter zu illustrieren, ist folgendes anzumerken: Das in Fig. 6 gezeigte Borstenbündel wird senkrecht zum Anker 45 in den Borstenbündelkanal 75 eingeführt. Die Bewegungsrichtung I ist demzufolge für dieses Borstenbündel 20 ebenfalls senkrecht zum Anker 45. Im nun dargelegten Beispiel ist die Bewegungsrichtung so festgelegt, dass die Borstenbündelhälfte 35 mit den höherstehenden Borstenenden 37 voran läuft. Das heisst, dass zuerst das ganze Borstenbündel 20 in den Borstenbündelkanal 75 eingefahren wird. Anschliessend teilt die Kante 77 das Borstenbündel 20 entlang des späteren Übergangs von den höherstehenden Borstenenden 37 zu den tieferstehenden Borstenenden 38. Die später höherstehenden Borstenenden 37 werden zusammen mit den später tieferstehenden Borstenenden 38 auf der linken Seite des Bündels verdrängt. Danach werden die tieferstehenden Borstenenden 38 auf der rechten Seite des Borstenbündels 20 auf ihre Länge geschnitten. Konkret heisst dies, dass der entsprechende Ausschnitt zwischen dem Anker 45 und den höherstehenden Borstenenden 37 weggeschnitten wird. Nachher wird das Borstenbündel 20 wieder freigestellt und im zweiten Schritt passiert die Bearbeitung auf der linken Seite des Borstenbündels 20.Im Rahmen des Profilierens der Borstenbündel 20 ist es neben dem Ausdünnen auch möglich die höherliegenden und tieferliegenden Borstenenden 37, 38 zu profilieren. Entweder geschieht dies vor der soeben beschriebenen Ausdünnung oder danach, vorzugsweise findet diese Profilierung nach dem Aus- oder Verdünnen statt. Die höherliegenden Borstenenden 37 können beispielsweise so geschnitten werden, dass sie ein gewünschtes Profil bilden. Beispielsweise eine Fläche, zum Beispiel in flacher oder gewellter Form. Andere Formen sind ebenfalls denkbar. Für die fertige Zahnbürste kann dies am Schluss ausgestaltungsmässig dazu führen, dass beispielsweise innerhalb desselben Borstenfeldes verschiedene Längen zwischen den höherstehenden und den tieferstehenden Borstenenden erreicht werden.

Weiter können beispielsweise die höherstehenden Borstenenden 37 verdrängt werden und die tieferstehenden Borstenenden 38 in der Borstenbündelhälfte 36 auf diese Weise geschnitten werden. Vorzugsweise wird dieser Schritt aber nicht durchgeführt und durch ein sehr präzises und gut ausgerichtetes Einbringen der Borsten 21 in die Sacklöcher 40 erreicht.

Im Prozessablauf erfolgt nach dem Profilieren und Ausdünnen der Borstenbündel 20 der Prozess des Rundens der Borsten 21. Bei der Verwendung von zylindrischen Borsten werden alle Borstenenden gerundet. Bei Verwendung von einseitig zugespitzten Borsten, wobei die höherstehenden Borstenenden 37 zugespitzt sind, werden die zylindrischen Enden das heisst die tieferstehenden Borstenenden 38 gerundet. Werden beidseitig zugespitzte Borsten verwendet, findet entweder keine Profilierung und keine Rundung statt, oder es findet eine Profilierung statt und nur die tieferstehenden Borstenenden 38 werden gerundet. Dementsprechend werden die Zuspitzungen der tieferliegenden Borstenenden 38 auch in einem gewissen Mass gerundet.

In einem ersten Schritt bzw. in einer ersten Abfolge von Schritten werden dabei die tieferstehenden Borstenenden 38 gerundet. Das bedeutet, dass die Schleifvorrichtung, welche für das Verrunden verwendet wird, auf die Höhe dieser Borstenenden 38 eingestellt wird und vorzugsweise die höherstehenden Borstenenden 37 dabei nicht verdrängt werden. Mittels einer oder mehrerer im Prozess nacheinander angeordnete Schleifscheiben nehmen dann die Verrundung vor. Anschliessend erfolgt in einem zweiten Schritt beziehungsweise einer zweiten Abfolge von Schritten die Verrundung der höherstehenden Borstenenden 37. Die Schleifvorrichtung wird dazu auf die Höhe dieser Borstenenden 37 eingestellt. Wiederum nehmen eine oder mehrere nacheinander angeordnete Schleifscheiben die Verrundung vor. Anschliessend ist der funktionelle Teil der Zahnbürste fertig gestellt.

Speziell am Verrundungsprozess ist, dass einerseits für jede Verrundungshöhe eine oder mehrere Schleifscheiben eingesetzt werden. Dabei werden für den zweiten Verrundungsschritt gleich viele oder mehr Schleifscheiben eingesetzt als für den ersten Schritt. Dies ist nötig, weil durch die erste Verrundung gewisse Schädigungen an den höherstehenden Borstenenden 37 entstehen können. Deshalb müssen diese Borstenenden 37 eher länger gerundet werden, als die im ersten Schritt gerundeten tieferstehenden Borstenenden 38.

Weitere Ausgestaltungsmöglichkeiten des Verrundungsprozesses sind möglich, um allfällige Schädigungen der höherstehenden Borstenenden 37 während dem ersten Verrundungsschritt zu minimieren. Dabei könnten beispielsweise die höherstehenden Borstenenden 37 während dem ersten Verrundungsschritt verdrängt werden.

Für die Realisierung von erfindungsgemässen und erfindungsgemäss hergestellten Zahnbürsten können die verschiedensten Borstenarten verwendet werden. Bevorzugt werden zylindrische Borsten 22 oder zugespitzte Borsten 23 eingesetzt.

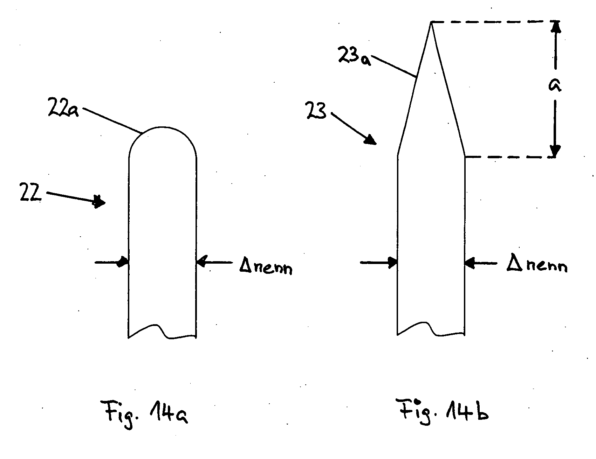

Fig. 14a zeigt das Borstenende einer zylindrischen Borste. Die zylindrischen Borsten sind vorzugsweise aus Polyamid (PA) hergestellt. Sie weisen über die Borstenlänge einen im Wesentlichen konstanten Nenndurchmesser Aₙₑₙₙ auf. Der Nenn-Durchmesser ist der Durchmesser an der dicksten Stelle der Borste. Der Nenn-Durchmesser beträgt beispielsweise 0,15 bis 0,25 mm. Die Spitze 22a der Borste ist im Endzustand in der Bürste abgerundet.

Zugespitzte Borsten 23 sind in Fig. 14b dargestellt. Zugespitzte Borsten 23 sind vorzugsweise aus Polyester (PBT) hergestellt und haben über einen Bereich ihrer Länge ebenfalls einen konstanten Durchmesser, z.B. ebenfalls einen Nenn-Durchmesser von 0,15 - 0,25 mm. Zur Spitze 23a hin verjüngt sich die Borste 23, beginnend bei einem Abstand a gemessen von der Spitze 23a. Gemessen ab der Spitze 23a entspricht der Durchmesser an der entsprechenden Stelle beispielsweise folgenden Werten:

| Abstand (mm) | % des Nenndurchmessers | |
|---|---|---|
| | Mittelwert | Toleranzbereich |
| 0,1 | 8% | 5-15% |
| 1 | 25% | 15-35% |
| 2 | 45% | 30-60% |
| 3 | 60% | 50-80% |
| 4 | 75% | 60-90% |
| 5 | 80% | 70-90% |
| 6 | 85% | > 75% |
| 7 | 90% | >80% |

Der Zuspitzungsprozess basiert auf der Reduktion des Durchmessers mittels eines chemischen Prozesses. Je nach Länge des Aufenthaltes der Borste in der chemischen Substanz baut sich der Kunststoff ab und verringert sich der Durchmesser. Die Form der Spitze ist so beeinflussbar.

Grundsätzlich existieren zwei Arten von zugespitzten Borsten. Jene die nur an einem Ende eine Zuspitzung aufweisen und jene die an beiden Borstenenden eine Zuspitzung haben. Die Zuspitzung ist von den Dimensionen her in beiden Fällen wie oben angegeben gestaltet. Die einseitig zugespitzten Borsten haben an einem Ende eine Zuspitzung und am anderen Ende sind sie zylindrisch gestaltet und können abgerundet werden. Die beidseitig zugespitzten Borsten sind an beiden Enden mit einer Zuspitzung ausgestaltet.

Um genügend Stabilität der einzelnen Filamente zu bewahren, wird der Nenndurchmesser über einen Grossteil der Länge auf über 75% belassen. Die oben aufgeführte Tabelle zeigt, dass die Zuspitzung der Filamente zum überwiegenden Teil auf den letzten 4 bis 5 mm erfolgt. Mit dieser Ausgestaltung kann die Spitze 23a kleinste Fissuren und die Interdentalräume bei genügender Filamentstabilität optimal erreichen.

Für alle Borstenarten wird, um eine genügende Flexibilität der Filamente zu erreichen eine Länge, ab Austritt aus Sackloch 40 des Bürstenkopfs zwischen 7 und 13 mm gewählt.

Bei erfindungsgemässen Zahnbürsten können die Borsten 21 komplett oder teilweise eingefärbt sein. Dementsprechend können bei teilweise eingefärbten Borsten beispielsweise nur die Borstenenden oder nur ein Borstenenden oder auch alles mit Ausnahme der Borstenenden eingefärbt sein. Die Einfärbung selbst kann als Indikator-Einfärbung oder auch als permanente Einfärbung gestaltet sein. Bei der Indikator-Färbung nutzt sich die Farbe im Laufe des Gebrauchs ab und dient so als Gebrauchsindikator.

Die zylindrischen Borsten, welche aus Polyamid hergestellt sind, können beispielsweise mit Lebensmittelfarben eingefärbt sein und über der Farbe mit einem Lack versehen sein. Mögliche, einsetzbare Lebensmittelfarben sind beispielsweise für blau "Aluminium Lake of 3,3'-dioxo-2,2'-diindolinyidene-5,5'-disulfonic acid", für gelb " Aluminium Lake of 5-hydroxy-1-(4-sulfophenyl)-4-(4-sulfophenylazo)-3-pyrazolecarboxylic acid" oder "Aluminium Lake of 6-hydroxy-5-(4-sulfophenylazo)-2-naphthalene-sulfonic acid". Diese Farben sind so ausgelegt, dass sie Food-Contact tauglich sind. Sind die Farben auf Borsten 21 aufgebracht, so ist die Oberfläche meistens nicht mehr in der Qualität, die eine automatische Verarbeitung auf Zahnbürsten-Beborstungsmaschinen zulässt. Deshalb werden die gesamten Borsten oder wenigstens die eingefärbten Partien der Borsten mit einem Lack versehen. Dieser Lack macht die Oberfläche glatter und ermöglicht so wiederum die automatische Verarbeitung.

Zugespitzte Borsten, welche aus Polyester hergestellt sind, lassen sich auf diese Weise nicht einfärben. Die Einfärbung dieser Borsten muss durch einen chemischen Prozess erfolgen, auf welchen an dieser Stelle aber nicht eingegangen wird. Der Prozess ist an sich bekannt.

Der Vorteil einer Einfärbung kann sein, dass der technische Aspekt der verschieden langen Borsten sichtbar gemacht werden kann, beispielsweise wenn nur die höherstehenden Borstenenden 37 eingefärbt sind, oder wenn lediglich die tieferstehenden Borstenenden 38 eingefärbt sind. Im Weiteren kann durch die Gestaltung als Indikator-Partie für den Kunden der Nutzen der Gebrauchsindikation beziehungsweise Verbrauchsindikation geschaffen werden.

Bevorzugt wird der Teil der Borsten eingefärbt, welcher die höherstehenden Borstenenden 37 umfasst. Die Einfärbung der beidseitigen Enden ist ebenfalls möglich.

Die Einfärbung hat, wenn sie nur die Borstenspitzen betrifft, auf der fertigen Zahnbürste eine Länge von 2 mm bis 10 mm, vorzugsweise zwischen 3 mm und 8 mm. Aufgrund der Verarbeitung ist die Einfärbung auf den nicht verarbeiteten Borsten länger bzw. angepasst, da allenfalls gewisse Teile der Einfärbung weggeschliffen oder weggeschnitten werden. Dementsprechend muss die Einfärbung im Rohmaterial nicht an beiden Enden der Borsten gleich lang sein, so wie sie auch im Endprodukt variieren kann. Bevorzugt ist die Einfärbung im Endprodukt dennoch an beiden Borstenenden gleich lang, falls beide Borstenenden eingefärbt sind.

Für die Herstellung von erfindungsgemässen Zahnbürsten können verschiedene Kunststoffe eingesetzt werden. Beispielhafte Möglichkeiten aus dem Bereich der Thermoplaste sind:
- Styrolpolymerisate wie Styrolacrylnitril (SAN), Polystyrol (PS), Acrylnitrylbutadienstyrol (ABS), Styrolmethylmethacrylate (SMMA), Styrolbutadien (SB beispielsweise BDS K-Resin von Chevron Phillips Chemical Company);
- Polyolefine wie Polypropylen (PP), Polyethylen (PE) beispielsweise auch in den Formen high density Polyethylen (HDPE) oder low density Polyethylen (LDPE);
- Polyester wie Polyethylenterephtalat (PET) in Form von säuremodifiziertem Polyethylenterephtalat (PETA) oder glykolmodifiziertem Polyethylenterephtalat (PETG) wie GN005 oder 6763 von Eastman Chemical Company, Polybutylenterephthalat (PBT), säuremodifiziertes Polycyclohexadimethanoltherastalat (PCT-A) wie BR003 von Eastman Chemical Company, glykolmodifiziertes Polycyclohexadimethanoltherastalat (PCT-G) wie DN004 von Eastman Chemical Company ;
- Cellulosederivate wie Celluloseacetat (CA), Celluloseacetobutyrat (CAB), Cellulosepropionat (CP), Celluloseacetatphtalat (CAP), Cellulosebutyrat (CB);
- Polyamide (PA) wie PA 6.6, PA 6.10, PA 6.12;
- Polymethylmethacrylat (PMMA);
- Polycarbonat (PC);
- Polyoxymethylen (POM);
- Polyvinylchlorid (PVC); und
- Polyurethan (PUR).

Beispiele aus dem Bereich der Thermoplastischen Elastomeren (TPE's) sind:
- Thermoplastische Polyurethan-Elastomere (TPE-U);
- Thermoplastische Styrol-Elastomere (TPE-S) wie beispielsweise ein Styrol-Ethylen-Butylen-Styrol-Copolymer (SEBS) oder Styrol-Butadien-Styrol-Copolymer (SBS);
- Thermoplastische Polyamid-Elastomere (TPE-A) wie beispielsweise Grilflex® von EMS Chemie AG;
- Thermoplastische Polyolefin-Elastomere (TPE-0); und
- Thermoplastische Polyester-Elastomere (TPE-E).

Als Hartkomponente wird im Fall einer nicht transparenten Bürste bevorzugt PP, am meisten bevorzugt wird PP mit einem E-Modul von 1000 - 2400 N/mm2, vorzugsweise 1300 bis 1800 N/mm2 verwendet. Für die Gestaltung einer transparenten Bürste werden bevorzugt Polyester wie die aufgeführten BR003, CAP, PA, PMMA, SAN oder ABS als Hartkomponente verwendet.

Als Weichkomponente wird bevorzugt ein TPE-S eingesetzt. Die Shore A Härten des Weich-Kunststoffes liegen vorzugsweise unter 90 Shore A. Die Weichkomponente kann sowohl als Komponente am Griffkörper der Zahnbürste als auch als Massage- oder Reinigungselement im Zahnbürstenkopf 10 integriert werden.

Der Aufbau des Borstenfeldes ist grundsätzlich sehr variabel möglich. Im Borstenfeld können zylindrische, einseitig und doppelseitig zugespitzte Borsten in beliebiger Weise kombiniert werden. Die Borstenbündel können als Borstenbündel mit höherstehenden und tieferstehenden Borstenenden in beliebiger Anzahl direkt integriert und kombiniert sein, daneben sind auch die konventionellen Formen von Borstenbündeln möglich bei welchen alle Borsten im Bündel gleich weit hoch stehen. Im Weiteren können weichelastische Massage- und / oder Reinigungselemente im Zahnbürstenkopf 10 in beliebiger Anordnung mit den obgenannten Borstenarten und Bündelarten kombiniert sein.

Die Borstenbündel 20 mit höherstehenden und tieferstehenden Borstenenden 37, 38 können beispielsweise mit konventionellen Borstenbündeln in der Form von Querreihen abwechselnd angeordnet sein, wobei die konventionellen Borstenbündel ihre Borstenenden tiefer liegend haben können als die höherstehenden Borstenenden 38. Die Borstenbündel 20 mit höherstehenden und tieferstehenden Borstenenden 37, 38 können geschlossene Konturen um andere Borstenbündel oder auch um weichelastische Massage- und / oder Reinigungselemente bilden. Beispielsweise können sie das Borstenfeld umgebend angeordnet sein.

Eine spezielle Ausgestaltungsvariante von Borstenbündeln 20 mit höherstehenden und tieferstehenden Borstenenden 37, 38 ist die Anordnung dieser Borstenbündel in einem von 90° abweichenden Winkel bezüglich dem Zahnbürstenkopf 10. Das heisst, es werden schräg stehende Borstenbündel gebildet, die sich natürlich auch kreuzen können und auf diese Weise X-förmige Anordnungen ermöglichen. Diese sind längs und quer auf dem Bürstenkopf möglich. Zum Beispiel können auf einem Zahnbürstenkopf 10 Querreihen gestaltet werden, in welchen alle Borstenbündel 20 in dieselbe Richtung geneigt sind. Die Ausdünnung / Profilierung ist in diesem Fall in gleicher Art und Weise möglich wie für die geradestehenden Borstenbündel. Der Unterschied ergibt sich im Aussehen der Borstenbündel. Im vorliegenden Fall sind die Ebene der höherstehenden Borstenenden und die Ebene der tieferstehenden Borstenenden nicht mehr senkrecht zur Achse des Sacklochs 40 in welchem sie eingebracht sind beziehungsweise zur Längsachse der Borsten 21. Die Ebenen sind in diesem Fall parallel zur Kopffläche der Zahnbürste.

Eine weitere Ausgestaltungsmöglichkeit ist die variable Anordnung der Anker 45. Wird die Zahnbürste beziehungsweise der Zahnbürstenkopf 10 während dem Beborstungsprozess entsprechend gedreht, so werden die Anker 45 relativ zueinander in unterschiedlichen Winkeln im Bürstenkopf fixiert. Die asymmetrische Stanzung der Borstenbündel 20, das heisst, die variable Anordnung von höherstehenden und tieferstehenden Borstenenden wird dadurch ermöglicht. Eine gewisse Regel ist dennoch notwendig, damit eine Ausdünnung stattfinden kann, das bedeutet, die Borstenbündel müssen in gewissen Querreihen angeordnet sein. Durch die variable Anordnung der Anker 45 und dementsprechend der höherstehenden Borstenenden 37 wird die Ausdünnung über das ganze Borstenfeld betrachtet weniger regelmässig beziehungsweise sind die verschiedenen Borstenbündel unterschiedlich stark ausgedünnt.

Die Alternative dazu, dass die Ankerstellungen und somit die Orientierung der Borstenbündel im Borstenfeld variiert werden, ist, dass alle Borstenbündel gleich orientiert sind und sich keine Spiegelung der höherstehenden Borstenenden bezüglich der Längsachse 29 ergibt.

Alle Teile des Zahnbürstenkörpers, das heisst Griffteil, Halsteil und Kopfteil können aus einer oder mehreren Hartkomponenten und zusätzlich mit einer oder mehreren Weichkomponenten hergestellt sein. Die Weichkomponente ist jedoch optional.

Das erfindungsgemässe Herstellungsverfahren und der erfindungsgemässe Zahnbürstenkopf ist nicht nur für Handzahnbürsten geeignet, sondern auch für Vibrations-/ Schallzahnbürsten oder elektrischen Zahnbürsten mit drehenden, oszillierenden, schwenkenden Kopfteilen 10 oder mit Kopfteilen 10, die in Längsrichtung eine Hin- und HerBewegung ausführen oder Kombinationen daraus.

Selbstverständlich sind die in dieser Schrift gezeigten Ausgestaltungsvarianten beispielhaft und die einzelnen Ausprägungen und Elemente dieser Ausgestaltungsvarianten können mit anderen Ausgestaltungsvarianten kombiniert werden ohne den Rahmen dieser Erfindung zu verlassen.

## Patentansprüche

1. Zahnbürste mit einem Handgriff und einem borstentragenden Kopfteil, die durch einen Halsteil miteinander verbunden sind, wobei das Kopfteil (10) aus einer Vielzahl von Borsten (21) bestehenden Borstenbündel (20) aufweist, **dadurch gekennzeichnet, dass** zwei oder mehr Borstenbündel (20) mindestens eine Borste (21) mit einem relativ zu den Borstenenden der anderen Borsten höherstehenden Borstenende (37) aufweisen, wobei die mindestens eine Borste (21) mit höherstehendem Borstenende (37) innerhalb des Borstenbündels (20) nicht zentrisch angeordnet ist, und wobei die zwei oder mehr Borstenbündel (20) auf gegenüberliegenden Seiten einer Mittellängsebene (39) der Zahnbürste angeordnet und die Borstenbündel (20) mit einer die mindestens eine Borste (21) mit höherstehendem Borstenende (37) umfassenden Hälfte (35) des Borstenbündels (20) zur Mittellängsebene (30) hin oder alternativ von ihr weg orientiert sind.

2. Zahnbürste gemäss Anspruch 1, **dadurch gekennzeichnet, dass** die Borstenbündel (20) mittels eines Ankers (45) am Kopfteil (10) befestigt sind.

3. Zahnbürste gemäss Anspruch 2, **dadurch gekennzeichnet dass** die Anker (45) alle die gleiche Orientierung aufweisen.

4. Zahnbürste gemäss Anspruch 2, **dadurch gekennzeichnet, dass** die Anker (45) mindestens zwei unterschiedliche Orientierungen aufweisen.

5. Zahnbürste gemäss Anspruch 3 oder 4, **dadurch gekennzeichnet, dass** die Anker (45) relativ zur Mittellängsebene (30) einen Winkel von 0° bis 20° bilden.

6. Zahnbürste gemäss Anspruch 1, wobei die zwei oder mehr Borstenbündel (20) zu dieser Mittellängsebene (30) spiegelbildlich angeordnet sind.

7. Zahnbürste gemäss einem der Ansprüche 1 bis 6, **dadurch gekennzeichnet, dass** das Borstenende (37) der mindestens einen Borste (21) 0.5 mm bis 5 mm, bevorzugt 2 mm bis 3 mm, relativ zu den Enden (38) der anderen Borsten (21) höher steht

8. Zahnbürste gemäss einem der Ansprüche 1 bis 7, **dadurch gekennzeichnet, dass** der Kopfteil Borsten (21) mit zugespitztem Borstenenden umfasst.

9. Zahnbürste gemäss einem der Ansprüche 1 bis 8, **dadurch gekennzeichnet, dass** der borstentragende Kopfteil wenigstens eine weichelastische Struktur, bevorzugt ein Massage- und Reinigungselement, umfasst.

10. Vorrichtung zum Beborsten einer Zahnbürste gemäss einem der Ansprüche 1 bis 9, umfassend eine Stopfvorrichtung mit einer Borstenzuführung, einem Borsten-Bündelförderer (50) mit einer Kerbe (51) und einem dem Borsten-Bündelförderer zugeordneten Anschlag (65) der Borstenbündel (20), **dadurch gekennzeichnet, dass** der Anschlag (65) und/oder die Borstenzuführung (55) senkrecht zu einer Bewegungsebene des Bündelförderers (50) verstellbar sind.

11. Vorrichtung zum Beborsten einer Zahnbürste gemäss Anspruch 10, **dadurch gekennzeichnet, dass** der Anschlag (65) in seiner Höhe zwischen 2 mm und 30 mm, bevorzugt zwischen 4 mm und 10 mm, verstellbar ist.

12. Vorrichtung zum Beborsten einer Zahnbürste gemäss Anspruch 10 oder 11, **dadurch gekennzeichnet, dass** der Anschlag (65) in einem Kontaktbereich mit Borsten (21) eine polierte Oberfläche / Unterstützungsfläche aufweist.

13. Vorrichtung zum Beborsten einer Zahnbürste gemäss Anspruch 12, **dadurch gekennzeichnet, dass** ein Abstand A zwischen der Unterstützungsfläche des Anschlags (65) und dem Bündelförderer (50) konstant ist.

14. Vorrichtung zum Beborsten einer Zahnbürste gemäss Anspruch 12, **dadurch gekennzeichnet, dass** ein Abstand A zwischen der Unterstützungsfläche des Anschlags (65) und dem Bündelförderer (50) in vom Stoffkanal (60) wegführender Richtung abnehmend ist.

15. Verfahren zur Herstellung einer Zahnbürste gemäss einem der Ansprüche 1 bis 10, wobei die Zahnbürste mit einer Vorrichtung gemäss einem der Ansprüche 11 bis 15 beborstet wird.
